# EUROPÄISCHE PATENTSCHRIFT

(11) **EP 3 545 583 B1**
(45) Veröffentlichungstag und Bekanntmachung des Hinweises auf die Patenterteilung: **02.09.2026**
(21) Anmeldenummer: 17801382.7
(22) Anmeldetag: 08.11.2017
(51) Int. Cl.: H01M 10/42, H01M 10/44, H01M 10/46, H01M 10/48, H01M 50/204, H02J 7/50, H02J 7/00

(54) **SYSTEM ZUR LAGERUNG EINER BATTERIE**
SYSTEM FOR STORING A BATTERY
SYSTÈME DE STOCKAGE D'UNE BATTERIE

(30) Priorität: 24.11.2016 DE 102016223251
(43) Veröffentlichungstag der Anmeldung: 02.10.2019
(73) Patentinhaber: Robert Bosch GmbH, 70442 Stuttgart (DE)
(72) Erfinder: BOSSI, Davide, 71638 Ludwigsburg (DE)
(86) Internationale Anmeldenummer: PCT/EP2017/078523
(87) Internationale Veröffentlichungsnummer: WO 2018/095726

(56) Entgegenhaltungen:
- EP-A1- 2 975 724
- EP-A2- 2 579 382
- DE-A1- 102012 015 522
- US-A1- 2011 043 043
- US-A1- 2014 028 089
- US-A1- 2015 042 285

## Beschreibung

### Feld der Erfindung

Die vorliegende Erfindung bezieht sich auf ein System und ein Verfahren zur Lagerung einer Batterie gemäß dem Oberbegriff der unabhängigen Patentansprüche.

### Stand der Technik

Wiederaufladbare Batterien werden in zunehmender Zahl eingesetzt. Anwendungsgebiete sind Elektromobilität, beispielsweise in Elektrokraftfahrzeugen und/oder Hybridkraftfahrzeugen, und/oder stationäre Energiespeicher, beispielsweise in Windkraftanlagen oder Solaranlagen. Sollen Batterien ausgetauscht werden, so kann es erforderlich werden, diese zwischenzulagern, um sie zu einem späteren Zeitpunkt in einer anderen Anwendung weiterzuverwenden. Gegenwärtig werden Batterien zur Lagerung lediglich verpackt und ohne direkte Überwachung gelagert.

DE 10 2012 015522 A1 offenbart ein Batterielager zum Lagern und Bereitstellen von Batterieeinheiten, wobei (i) Batterieeinheiten mit Batteriesteuerung über (ii) ein zentrales Steuerungsmittel kontrolliert werden. Nötigenfalls wird eine Batterieeinheit durch einen Entladevorgang zur Lagerung in einen nicht oder teilweise aufgeladenen Zustand versetzt, was die Degradation der Batterieeinheit verringert und der Lebensdauer der betreffenden Batterieeinheit zuträglich ist.

US 2011/043043 A1 offenbart ein Batterielager zum Lagern und Bereitstellen von Batterieeinheiten, mit (i) Batterieeinheiten mit Batteriesteuerung und (ii) einem zentralen Steuerungsmittel. Das System wird über eine externe zentrale Spannungsversorgung mit Energie versorgt und kann zum Energiesparen in einen Standby-Modus versetzt werden.

### Offenbarung der Erfindung

Die Erfindung geht aus von einem System zur Lagerung einer Batterie, wobei die Leistungsfähigkeit und Funktionsfähigkeit der Batterie während der Lagerung erhalten bleiben soll.

Der Kern der Erfindung besteht darin, dass das System zumindest eine Batterie, aufweisend zumindest eine Batteriezelle und eine Batteriesteuerung, ein zentrales Steuerungsmittel und eine zentrale Spannungsversorgung aufweist,
wobei die Batteriesteuerung signalleitend verbunden ist mit dem zentralen Steuerungsmittel, und
wobei die Batteriesteuerung aus der zentralen Spannungsversorgung gespeist ist.

Hintergrund der Erfindung ist, dass die Batterie mittels der lokalen Batteriesteuerung steuerbar und überwachbar ist. Die Batteriesteuerung ist aus der zentralen Spannungsversorgung gespeist. Somit wird die Batteriesteuerung während der Lagerung nicht aus der Batterie selbst gespeist und ist unabhängig von dem Zustand der Batterie betreibbar.

Die Batteriesteuerung wird von dem zentralen Steuerungsmittel angesteuert.

Vorteilhafterweise ist die Batteriesteuerung von dem zentralen Steuerungsmittel in regelmäßigen zeitlichen Abständen einschaltbar und auslesbar.

Vorteilhafterweise ist somit der Status der Batterie in regelmäßigen zeitlichen Abständen überwachbar und die Belastung und daraus resultierende Alterung der Batterie und der Batteriesteuerung ist reduzierbar.

Weitere vorteilhafte Ausführungsformen der vorliegenden Erfindung sind Gegenstand der Unteransprüche.

Erfindungsgemäß weist die Batteriesteuerung ein Speichermittel auf zur Speicherung von Statusdaten der Batterie, insbesondere
- einer Identifikationsnummer und/oder
- eines Fehlerstatus und/oder
- einer Kapazität und/oder
- eines Ladezustands und/oder
- einer Zellspannung und/oder
- einer Zelltemperatur.

Von Vorteil ist dabei, dass die Statusdaten der Batterie mittels der Batteriesteuerung in regelmäßigen zeitlichen Abständen auslesbar und in das Speichermittel speicherbar sind. Vorteilhafterweise ist das Speichermittel als nichtflüchtiger Speicher ausführbar, beispielsweise ein EEPROM oder ein Flashspeicher, so dass die Statusdaten nach dem Einschalten der Batteriesteuerung direkt verfügbar sind.

Erfindungsgemäß ist das zentrale Steuerungsmittel eingerichtet, die Statusdaten der Batterie auszuwerten und/oder mit einem Grenzwert zu vergleichen, wobei bei Überschreiten und/oder Unterschreiten des Grenzwertes eine Sicherheitsfunktion ausführbar ist von dem zentralen Steuerungsmittel. Somit ist eine defekte Batterie kennzeichenbar von dem zentralen Steuerungsmittel. Die defekte Batterie ist vom Lager identifizierbar und aussortierbar. Somit werden die Lagerkosten gesenkt.

Erfindungsgemäß ist die Sicherheitsfunktion die Aktivierung eines Sicherheitsmechanismus der Batterie, umfassend ein Überdruckventil und/oder einen Kühlmechanismus, und eine Abschaltung der Batteriesteuerung.

Vorteilhafterweise ist die Sicherheitsfunktion zusätzlich
- eine Abschaltung der Batterie und/oder
- eine Beladung der Batterie und/oder
- eine Entladung der Batterie und/oder
- eine Schnellentladung der Batterie.

Ferner ist es von Vorteil, wenn die zentrale Spannungsversorgung als Kleinspannungsversorgung ausgeführt ist, insbesondere als 24-Volt-Versorgung oder als 12-Volt-Versorgung. Dadurch wird lediglich die Spannung zur Verfügung gestellt, die für den Betrieb der Batteriesteuerung erforderlich ist. Eine aufwändige Hochspannungsversorgung für die Batterie ist einsparbar.

Bei einer weiteren vorteilhaften Ausgestaltung weist das System zusätzlich eine Ladevorrichtung zum Beladen und/oder Entladen der Batterie auf. Vorteilhafterweise ist die Ladevorrichtung als Hochspannungsversorgung ausgeführt. Von Vorteil ist dabei, dass die Ladevorrichtung nur eingeschaltet wird, wenn die Batterie geladen oder entladen wird.

Erfindungsgemäß ist die Batteriesteuerung einschaltbar und/oder abschaltbar von der zentralen Steuerung, insbesondere wobei die Batteriesteuerung von einem aktiven Zustand in einen Standby-Modus überführbar ist. Somit ist die Belastung und daraus resultierende Alterung der Batteriesteuerung reduzierbar im Vergleich zu einem Dauerbetrieb.

Vorteilhafterweise weist das System eine Aufnahmevorrichtung auf, in der die Batterie angeordnet ist, wobei die Aufnahmevorrichtung eine Kontaktstelle aufweist, wobei die Kontaktstelle geeignet ist, die Batteriesteuerung mit dem zentralen Steuerungsmittel und/oder der zentralen Spannungsversorgung zu verbinden. Vorteilhafterweise ist die Kontaktstelle als Steckverbinderteil oder Klickverbinderteil ausgeführt, so dass die Verbindung der Batteriesteuerung mit dem zentralen Steuerungsmittel und/oder dem zentralen Steuerungsmittel schnell und sicher ausführbar ist.

Gemäß einer weiteren vorteilhaften Ausführungsform weist das System eine Vielzahl von Batterien auf, wobei jede Batterie eine jeweilige Batteriesteuerung aufweist, wobei die jeweilige Batteriesteuerung signalleitend mit dem zentralen Steuerungsmittel verbunden ist. Von Vorteil ist dabei, dass eine Vielzahl von Batterien in dem System mittels eines einzigen zentralen Steuerungsmittels überwachbar und steuerbar ist. Ferner ist von Vorteil, wenn die Batteriesteuerungen mittels eines Bussystems mit dem zentralen Steuerungsmittel verbunden sind. Somit sind die Batteriesteuerungen und das zentrale Steuerungsmittel mittels eines sicheren Kommunikationssystems miteinander verbunden.

Vorzugsweise ist das Bussystem als Master-Slave-System ausgeführt, wobei das zentrale Steuerungsmittel als Master und die Batteriesteuerungen als Slaves fungieren.

Von Vorteil ist dabei, dass die Batteriesteuerungen von dem zentralen Steuerungsmittel ansteuerbar sind, insbesondere einschaltbar und/oder abschaltbar.

Ein Verfahren zur Lagerung einer Batterie mittels eines Systems, insbesondere wie zuvor beschrieben beziehungsweise nach einem der auf das System bezogenen Ansprüche, kann die die folgenden Verfahrensschritte aufweisen:
- wobei in einem ersten Verfahrensschritt das zentrale Steuerungsmittel die Batteriesteuerung auffordert, Statusdaten der Batterie an das zentrale Steuerungsmittel zu senden,
- wobei in einem zweiten Verfahrensschritt die Batteriesteuerung die geforderten Statusdaten an das zentrale Steuerungsmittel sendet,
- wobei in einem dritten Verfahrensschritt das zentrale Steuerungsmittel die Statusdaten der Batterie auswertet,
- wobei in einem vierten Verfahrensschritt bei Überschreiten und/oder Unterschreiten eines jeweiligen kritischen Grenzwertes durch die Statusdaten der Batterie eine Sicherheitsaktion von dem zentralen Steuerungsmittel ausgeführt wird.

Hintergrund bei dem Verfahren ist, dass die Batterie mittels der lokalen Batteriesteuerung steuerbar und überwachbar ist.

Die Batteriesteuerung wird von dem zentralen Steuerungsmittel angesteuert.

Vorteilhafterweise ist die Batteriesteuerung von dem zentralen Steuerungsmittel in regelmäßigen zeitlichen Abständen auslesbar.

Ferner ist es von Vorteil, wenn in einem fünften Verfahrensschritt die Batteriesteuerung von dem zentralen Steuerungsmittel deaktiviert wird, insbesondere wobei die Batteriesteuerung von dem aktiven Modus in einen Standby-Modus versetzt wird.

Somit ist die Batteriesteuerung nur eingeschaltet, wenn das zentrale Steuerungsmittel mit der Batteriesteuerung kommuniziert oder die Batteriesteuerung die Batterie steuert.

Bevorzugt wird dazu vor oder zeitgleich mit dem ersten Verfahrensschritt die Batteriesteuerung von dem zentralen Steuerungsmittel aktiviert.

Vorteilhafterweise wird dabei die Batteriesteuerung von einem Standby-Modus in einen aktiven Modus versetzt. Im Standby-Modus ist die Batteriesteuerung eingerichtet Anweisungen, insbesondere einen Weckruf, von dem zentralen Steuerungsmittel zu empfangen.

Vorteilhafterweise ist die Belastung und daraus resultierende Alterung der Batterie und der Batteriesteuerung reduzierbar im Vergleich zu einer Batterie beziehungsweise Batteriesteuerung im Dauerbetrieb.

Vorzugsweise werden im ersten Verfahrensschritt ausgewählte Statusdaten von dem zentralen Steuerungsmittel angefordert. Somit ist die Übertragungszeit der Statusdaten verkürzbar.

Vorzugsweise liest die Batteriesteuerung im zweiten Verfahrensschritt ein Speichermittel der Batteriesteuerung aus, in das die Statusdaten der Batterie gespeichert wurden. Vorteilhafterweise ist das Speichermittel als nichtflüchtiger Speicher ausführbar, beispielsweise ein EEPROM oder ein Flashspeicher, so dass die Statusdaten nach dem Einschalten der Batteriesteuerung sofort verfügbar sind.

Vorteilhafterweise werden im dritten Verfahrensschritt die Statusdaten von dem zentralen Steuerungsmittel mit einem der jeweiligen Statusdatenart zugeordneten Grenzwert verglichen. Dazu weist das zentrale Steuerungsmittel ein zentrales Speichermittel auf, in dem der jeweilige Grenzwert gespeichert ist.

Vorzugsweise wird im vierten Verfahrensschritt als Sicherheitsaktion die Batterie abgeschaltet und/oder entladen und/oder schnellentladen und/oder geladen und/oder ein Sicherheitsmechanismus der Batterie aktiviert.

Ferner ist es von Vorteil, wenn die Batteriesteuerung aus einer zentralen Spannungsversorgung gespeist wird. Somit wird die Batteriesteuerung während der Lagerung nicht aus der Batterie selbst gespeist und unabhängig von dem Zustand der Batterie betrieben.

Bei einer vorteilhaften Ausgestaltung belädt und entlädt das zentrale Steuerungsmittel die Batterie in regelmäßigen zeitlichen Abständen, wobei die Batterie bis zu einem ersten Wert, der unter einem maximalen Grenzwert liegt, geladen wird und anschließend bis zu einem zweiten Wert, der über einem minimalen Grenzwert liegt, entladen wird. Dabei werden der minimale Grenzwert und der maximale Grenzwert sowie der zeitliche Abstand zwischen zwei Be- und Entladezyklen in Abhängigkeit von dem Zustand der Batterie gewählt, beispielsweise abhängig vom Alter und der Kapazität der Batterie. Vorteilhafterweise ist mittels des kontrollierten Beladens und Entladens die Lebensdauer der Batterie verlängerbar.

### Kurze Beschreibung der Zeichnungen

Im folgenden Abschnitt wird die Erfindung anhand von Ausführungsbeispielen, aus denen sich weitere erfinderische Merkmale ergeben können, auf die die Erfindung aber in ihrem Umfang nicht beschränkt ist, erläutert. Die Ausführungsbeispiele sind in den Zeichnungen dargestellt.

Es zeigt:

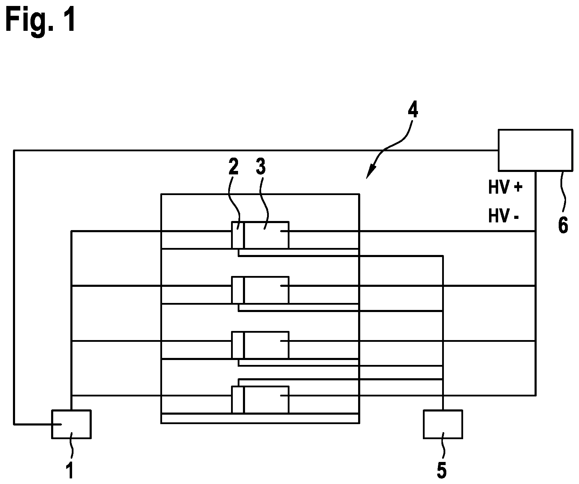

- Fig. 1: eine schematische Darstellung des erfindungsgemäßen Systems zur Lagerung einer Batterie.

### Ausführungsformen der Erfindung

In Fig. 1 ist das erfindungsgemäße System zur Lagerung einer Batterie 3 dargestellt. Das System zur Lagerung einer Batterie weist zumindest eine Batterie 3, eine zentrale Spannungsversorgung 5, insbesondere einer Niedervoltspannungsversorgung, ein zentrales Steuerungsmittel 1 und zumindest eine Aufnahmevorrichtung 4 für die Batterie 3 auf.

Vorzugsweise weist das System zur Lagerung einer Batterie 3 eine Ladevorrichtung 6, insbesondere eine Hochspannungsladevorrichtung, zum Beladen und/oder Entladen der Batteriezelle auf. Die Ladevorrichtung 6 ist mittels Hochspannungsleitungen elektrisch leitend mit der zumindest einen Batterie 3 verbunden. Die Ladevorrichtung 6 ist datenleitend mit dem zentralen Steuerungsmittel 1 verbunden

Die Aufnahmevorrichtung 4 weist eine Kontaktstelle auf, die geeignet ist, die Batteriesteuerung 2 mit dem zentralen Steuerungsmittel 1 und/oder der zentralen Spannungsversorgung 5 zu verbinden. Beispielsweise ist die Kontaktstelle als Steckverbinderteil ausgeführt, insbesondere als dreipoliges Steckverbinderteil zur Verbindung der Batteriesteuerung 2 mit dem zentralen Steuerungsmittel 1 und mit der zentralen Spannungsversorgung 5. Alternativ ist das Steckverbinderteil fünfpolig ausgeführt, wobei das Steckverbinderteil zur Verbindung der Batteriesteuerung 2 mit dem zentralen Steuerungsmittel 1 und mit der zentralen Spannungsversorgung 5 und zur Verbindung der Batterie 3 mit der Ladevorrichtung 6 für die Batterie 3 eingerichtet ist.

Unter einer Batterie 3 wird hierbei eine wiederaufladbare Batterie verstanden, insbesondere eine elektrochemische Batteriezelle und/oder ein Batteriemodul aufweisend zumindest eine elektrochemische Batteriezelle und/oder ein Batteriepack aufweisend zumindest ein Batteriemodul. Die Batteriezelle ist als lithiumbasierte Batteriezelle, insbesondere Lithium-Ionen-Batteriezelle, ausführbar. Alternativ ist die Batteriezelle als Lithium-Polymer-Batteriezelle oder Nickel-Metallhydrid-Batteriezelle oder Blei-Säure-Batteriezelle oder Lithium-Luft-Batteriezelle oder Lithium-Schwefel-Batteriezelle ausgeführt.

Die Batterie 3 weist zumindest eine Batteriesteuerung 2 auf. Die Batteriesteuerung 2 weist ein Speichermittel auf, das zur Speicherung von Statusdaten der Batterie 3 eingerichtet ist, insbesondere zur Speicherung von
- einer Identifikationsnummer und/oder
- eines Fehlerstatus und/oder
- einer Kapazität und/oder
- eines Ladezustands und/oder
- einer Zellspannung und/oder
- einer Zelltemperatur.

Die zentrale Spannungsversorgung 5 ist elektrisch leitend mit der Batteriesteuerung 2 verbunden. Vorzugsweise ist die zentrale Spannungsversorgung 5 als zentrale Kleinspannungsversorung ausgeführt, insbesondere als 12-Volt-Versorgung.

Die Batteriesteuerung 2 ist zur Steuerung aller elektrischen Funktionen des Systems, insbesondere des Beladens und Entladens der Batterie 3, und/oder zur Überwachung der Batterie 3 eingerichtet.

Die Batteriesteuerung 2 ist mit dem zentralen Steuerungsmittel 1 signalleitend verbunden. Das zentrale Steuerungsmittel 1 ist dazu eingerichtet, die Batteriesteuerung 2 einzuschalten und/oder abzuschalten.

Das Speichermittel der Batteriesteuerung 2 ist auslesbar von dem zentralen Steuerungsmittel 1. Die aus dem Speichermittel ausgelesenen Daten sind auswertbar mittels eines Auswertemittels des zentralen Steuerungsmittels 1, insbesondere statistisch auswertbar.

Das zentrale Steuerungsmittel 1 weist ein zentrales Speichermittel auf, in dem Grenzwerte zum Vergleich mit den Statusdaten der Batterie 3 gespeichert sind. Das zentrale Steuerungsmittel 1 ist zum Vergleich von Statusdaten mit einem Grenzwert eingerichtet. Wird ein kritischer Grenzwert überschritten oder unterschritten, so ist das zentrale Steuerungsmittel 1 als Reaktion darauf zum Ausführen einer Sicherheitsfunktion eingerichtet. Eine Sicherheitsfunktion ist eine Aktivierung eines Sicherheitsmechanismus der Batterie 3, umfassend ein Überdruckventil und/oder einen Kühlmechanismus, und die Abschaltung der Batteriesteuerung 2. Die Sicherheitsfunktion ist gegebenenfalls zusätzlich beispielsweise
- eine Abschaltung der Batterie und/oder
- eine Beladung der Batterie 3 und/oder
- eine Entladung der Batterie 3 und/oder
- eine Schnellentladung der Batterie 3.

In einem bevorzugten Ausführungsbeispiel ist das erfindungsgemäße System zur Lagerung eine Batterie 3 zur Lagerung einer Vielzahl von Batterien 3 eingerichtet. Dazu sind die Batterien 3 in der Aufnahmevorrichtung 4 angeordnet.

Jede Batterie 3 weist zumindest eine jeweilige Batteriezelle und eine jeweilige Batteriesteuerung 2 wie zuvor beschrieben auf.

Die Batteriesteuerungen 2 werden aus der zentralen Spannungsversorgung 5 gespeist.

Dazu sind die Batteriesteuerungen 2 elektrisch leitend mit der zentralen Spannungsversorgung 5 verbunden, wobei die Batterieschaltungen parallel geschaltet angeordnet sind.

Das zentrale Steuerungsmittel 1 ist mit den Batteriesteuerungen 2 signalleitend verbunden. Vorzugsweise sind das zentrale Steuerungsmittel 1 und die Batteriesteuerungen 2 mittels eines Bussystems, insbesondere eines Master-Slave-Bussystems, miteinander verbunden. Dazu werden die Batteriesteuerungen 2 als Slaves mittels ihrer Identifikationsnummer adressiert und von dem zentralen Steuerungsmittel 1 über den Bus aufgerufen.

Vorzugsweise weist ein erstes Bustelegramm des zentralen Steuerungsmittels 1 eine Aufforderung zum Einschalten der jeweiligen adressierten Batteriesteuerung 2 auf. Vorteilhafterweise wird mittels des ersten Bustelegramms die jeweilige adressierte Batteriesteuerung 2 aus einem Standby-Modus aufgeweckt, um mit dem zentralen Steuerungsmittel 1 über den Bus zu kommunizieren.

Ein zweites Bustelegramm des zentralen Steuerungsmittels 1 weist eine Aufforderung zum Abschalten der jeweiligen Batteriesteuerung 2 auf. Vorteilhafterweise wird mittels des zweiten Bustelegramms die jeweilige adressierte Batteriesteuerung 2 in einen Standby-Modus versetzt, nachdem die Kommunikation mit dem zentralen Steuerungsmittel 1 abgeschlossen ist.

Ein Verfahren zur Lagerung einer Batterie 3 weist die folgenden, insbesondere zeitlich aufeinanderfolgenden, Verfahrensschritte auf:
In einem nullten Verfahrensschritt wird die Batteriesteuerung 2 der Batterie 3 von dem zentralen Steuerungsmittel 1 aktiviert, insbesondere wobei die Batteriesteuerung 2 von einem Standby-Modus in einen aktiven Modus versetzt wird.

In einem ersten Verfahrensschritt fordert das zentrale Steuerungsmittel 1 die Batteriesteuerung 2 auf, Statusdaten der Batterie an das zentrale Steuerungsmittel 1 zu senden. Dabei werden entweder ausgewählte Statusdaten oder alle verfügbaren Statusdaten von dem zentralen Steuerungsmittel 1 angefordert.

Vorzugsweise werden der nullte Verfahrensschritt und der erste Verfahrensschritt zeitgleich ausgeführt, insbesondere mittels eines einzigen Bustelegramms.

In einem zweiten Verfahrensschritt liest die Batteriesteuerung 2 das Speichermittel aus und sendet die geforderten Statusdaten an das zentrale Steuerungsmittel 1.

In einem dritten Verfahrensschritt wertet das zentrale Steuerungsmittel 1 die Statusdaten der Batterie 3 aus, insbesondere statistisch. Vorzugsweise werden die Statusdaten von dem zentralen Steuerungsmittel 1 mit einem der jeweiligen Statusdatenart zugeordneten Grenzwert verglichen, beispielsweise wird der Ladezustand der Batterie mit einem minimalen Ladezustand verglichen.

In einem vierten Verfahrensschritt wird bei Überschreiten und/oder Unterschreiten eines jeweiligen kritischen Grenzwertes durch die Statusdaten der Batterie 3 eine Sicherheitsaktion von dem zentralen Steuerungsmittel 1 ausgeführt. Als Sicherheitsaktion wird die Batterie 3 beispielsweise abgeschaltet und/oder entladen und/oder schnellentladen und/oder geladen und/oder ein Sicherheitsmechanismus der Batterie aktiviert.

In einem fünften Verfahrensschritt wird die Batteriesteuerung 2 von dem zentralen Steuerungsmittel 1 deaktiviert, insbesondere wobei die Batteriesteuerung 2 von dem aktiven Modus in einen Standby-Modus versetzt wird.

Vorzugsweise wird das Verfahren in regelmäßigen zeitlichen Abständen ausgeführt.

Vorzugsweise führt das zentrale Steuerungsmittel 1 in regelmäßigen zeitlichen Abständen Belade- und Entlade-Zyklen der Batterie 3 aus, insbesondere unabhängig von einer Grenzwertüberschreitung und/oder einer Grenzwertunterschreitung der Statusdaten der Batterie 3. Dazu wird die Batterie 3 in Abhängigkeit von ihrer Kapazität und ihrem Alter in regelmäßigen zeitlichen Abständen bis zu einem ersten Wert, der unter einem maximalen Grenzwert liegt, geladen und anschließend bis zu einem zweiten Wert, der über einem minimalen Grenzwert liegt, entladen.

## Patentansprüche

1. System zur Lagerung einer Batterie (3),
wobei das System zumindest eine Batterie (3), aufweisend zumindest eine Batteriezelle und eine Batteriesteuerung (2), ein zentrales Steuerungsmittel (1) und eine zentrale Spannungsversorgung (5) aufweist,
wobei die Batteriesteuerung (2) signalleitend verbunden ist mit dem zentralen Steuerungsmittel (1),
wobei die Batteriesteuerung (2) ein Speichermittel aufweist zur Speicherung von Statusdaten der Batterie (3),
wobei das zentrale Steuerungsmittel (1) eingerichtet ist, die Statusdaten der Batterie (3) auszuwerten und mit einem Grenzwert zu vergleichen,
wobei bei Überschreiten und/oder Unterschreiten des Grenzwertes eine Sicherheitsfunktion ausgeführt wird von dem zentralen Steuerungsmittel (1),
**dadurch gekennzeichnet, dass**
die Sicherheitsfunktion die Aktivierung eines Sicherheitsmechanismus der Batterie (3) umfassend ein Überdruckventil und/oder einen Kühlmechanismus ist, und
die Batteriesteuerung (2) aus der zentralen Spannungsversorgung (5) gespeist ist,
wobei die Batteriesteuerung (2) einschaltbar und/oder abschaltbar ist von dem zentralen Steuerungsmittel (1), insbesondere wobei die Batteriesteuerung (2) von einem aktiven Zustand in einen Standby-Modus überführbar ist.

2. System nach Anspruch 1,
**dadurch gekennzeichnet, dass**
die Batteriesteuerung (2) ein Speichermittel aufweist zur Speicherung von
- einer Identifikationsnummer und/oder
- eines Fehlerstatus und/oder
- einer Kapazität und/oder
- eines Ladezustands und/oder
- einer Zellspannung und/oder
- einer Zelltemperatur.

3. System nach einem der vorhergehenden Ansprüche,
**dadurch gekennzeichnet, dass**
die Sicherheitsfunktion zusätzlich
- eine Abschaltung der Batterie (3) und/oder
- eine Beladung der Batterie (3) und/oder
- eine Entladung der Batterie (3) und/oder
- eine Schnellentladung der Batterie (3) ist.

4. System nach einem der vorhergehenden Ansprüche,
**dadurch gekennzeichnet, dass**
die zentrale Spannungsversorgung (5) als 24-Volt-Versorgung oder als 12-Volt-Versorgung ausgeführt ist.

5. System nach einem der vorhergehenden Ansprüche,
**dadurch gekennzeichnet, dass**
das System eine Ladevorrichtung (6)i zum Beladen und/oder Entladen der Batterie (3) aufweist,
wobei die Ladevorrichtung (6) datenleitend mit dem zentralen Steuerungsmittel (1) verbunden ist,
wobei die Ladevorrichtung (6) elektrisch leitend mit der Batterie (3) verbunden ist, insbesondere mittels Hochspannungsleitungen.

6. System nach einem der vorhergehenden Ansprüche,
**dadurch gekennzeichnet, dass**
das System eine Aufnahmevorrichtung (4) aufweist, in der die Batterie (3) angeordnet ist,
wobei die Aufnahmevorrichtung (4) eine Kontaktstelle aufweist, wobei die Kontaktstelle geeignet ist, die Batteriesteuerung (2) mit dem zentralen Steuerungsmittel (1) und/oder der zentralen Spannungsversorgung (5) zu verbinden.

7. System nach einem der vorhergehenden Ansprüche,
**dadurch gekennzeichnet, dass**
das System eine Vielzahl von Batterien (3) aufweist,
wobei jede Batterie (3) eine jeweilige Batteriesteuerung (2) aufweist,
wobei die jeweilige Batteriesteuerung (2) signalleitend mit dem zentralen Steuerungsmittel (1) verbunden ist.

8. System nach Anspruch 7,
**dadurch gekennzeichnet, dass**
die Batteriesteuerungen (2) mittels eines Bussystems mit dem zentralen Steuerungsmittel (1) verbunden sind,
insbesondere wobei das Bussystem als Master-Slave-System ausgeführt ist, wobei das zentrale Steuerungsmittel (1) als Master und die Batteriesteuerungen (3) als Slaves fungieren.

## Claims

1. System for storing a battery (3),
wherein
the system comprises at least one battery (3), having at least one battery cell and a battery controller (2), a central control means (1) and a central voltage supply (5),
wherein the battery controller (2) is signal-conductively connected to the central control means (1),
wherein the battery controller (2) comprises a storage means for storing status data concerning the battery (3),
wherein the central control means (1) is designed to evaluate status data concerning the battery (3) and to compare them with a limiting value,
wherein, in the event of the limiting value being exceeded or undershot, a safety function is executed by the central control means (1), **characterized in that**
the safety function is the activation of a safety mechanism of the battery (3), comprising a pressure-relief valve and/or a cooling mechanism, and the battery controller (2) is fed from the central voltage supply (5),
wherein the battery controller (2) can be switched on and/or switched off by the central control means (1), in particular wherein the battery controller (2) can be switched from an active state to a standby mode.

2. System according to Claim 1,
**characterized in that**
the battery controller (2) has a storage means for storing
- an identification number and/or
- a fault status and/or
- a capacity and/or
- a state of charge and/or
- a cell voltage and/or
- a cell temperature.

3. System according to one of the preceding claims,
**characterized in that**
the safety function is additionally
- a switch-off of the battery (3) and/or
- a charging of the battery (3) and/or
- a discharging of the battery (3) and/or
- a rapid discharging of the battery (3).

4. System according to one of the preceding claims,
**characterized in that**
the central voltage supply (5) is configured as a 24 V supply or as a 12 V supply.

5. System according to one of the preceding claims,
**characterized in that**
the system has a charging device (6) for charging and/or discharging the battery (3),
wherein the charging device (6) is data-conductively connected to the central control means (1),
wherein the charging device (6) is connected to the battery (3) in an electrically conductive manner, in particular by means of high-voltage lines.

6. System according to one of the preceding claims,
**characterized in that**
the system has a location device (4), in which the battery (3) is arranged,
wherein the location device (4) has a contact point, and wherein the contact point is suitable for connecting the battery controller (2) to the central control means (1) and/or to the central voltage supply (5).

7. System according to one of the preceding claims,
**characterized in that**
the system has a plurality of batteries (3),
wherein each battery (3) has a respective battery controller (2),
wherein the respective battery controller (2) is signal-conductively connected to the central control means (1).

8. System according to Claim 7,
**characterized in that**
the battery controllers (2) are connected to the central control means (1) by means of a bus system,
in particular wherein the bus system is configured as a master-slave system,
wherein the central control means (1) functions as the master and the battery controllers (3) function as slaves.

## Revendications

1. Système de stockage d'une batterie (3),
dans lequel
le système comporte au moins une batterie (3) présentant au moins un élément de batterie et une commande de batterie (2), un moyen de commande central (1) et une alimentation en tension centrale (5),
la commande de batterie (2) étant reliée par une liaison de signalisation au moyen de commande central (1),
la commande de batterie (2) comportant un moyen de stockage permettant de stocker des données d'état de la batterie (3),
le moyen de commande central (1) étant conçu pour évaluer les données d'état de la batterie (3) et les comparer à une valeur limite,
une fonction de sécurité étant assurée par le moyen de commande central (1) en cas de dépassement vers le haut et/ou vers le bas de la valeur limite, **caractérisé en ce que**
la fonction de sécurité est l'activation d'un mécanisme de sécurité de la batterie (3) comprenant une soupape de surpression et/ou un mécanisme de refroidissement, et **en ce que** la commande de batterie (2) est alimentée par l'alimentation en tension centrale (5),
la commande de batterie (2) pouvant être activée et/ou désactivée par le moyen de commande central (1), en particulier lorsque la commande de batterie (2) peut passer d'un état actif à un mode veille.

2. Système selon la revendication 1,
**caractérisé en ce que**
la commande de batterie (2) comporte un moyen de stockage permettant de stocker
- un numéro d'identification et/ou
- un état d'erreur et/ou
- une capacité et/ou
- un état de charge et/ou
- une tension d'élément et/ou
- une température d'élément.

3. Système selon l'une des revendications précédentes,
**caractérisé en ce que**
la fonction de sécurité est en outre
- une mise hors tension de la batterie (3) et/ou
- une charge de la batterie (3) et/ou
- une décharge de la batterie (3) et/ou
- une décharge rapide de la batterie (3).

4. Système selon l'une des revendications précédentes,
**caractérisé en ce que**
l'alimentation en tension centrale (5) est réalisée sous la forme d'une alimentation 24 volts ou d'alimentation 12 volts.

5. Système selon l'une des revendications précédentes,
**caractérisé en ce que**
le système comporte un dispositif de charge (6) permettant de charger et/ou de décharger la batterie (3),
le dispositif de charge (6) étant relié au moyen de commande central (1) par une liaison de données,
le dispositif de charge (6) étant relié de manière électriquement conductrice à la batterie (3), en particulier au moyen de lignes à haute tension.

6. Système selon l'une des revendications précédentes,
**caractérisé en ce que**
le système comporte un dispositif de réception (4) dans lequel est agencée la batterie (3),
le dispositif de réception (4) présentant un point de contact, le point de contact étant approprié pour connecter la commande de batterie (2) au moyen de commande central (1) et/ou à l'alimentation en tension centrale (5).

7. Système selon l'une des revendications précédentes,
**caractérisé en ce que**
le système comporte une pluralité de batteries (3),
chaque batterie (3) comportant une commande de batterie (2),
la commande de batterie (2) respective étant connectée par une liaison de signalisation au moyen de commande central (1).

8. Système selon la revendication 7,
**caractérisé en ce que**
les commandes de batterie (2) sont reliées par l'intermédiaire d'un système de bus au moyen de commande central (1),
le système de bus étant en particulier réalisé sous la forme d'un système maître-esclave,
le moyen de commande central (1) fonctionnant en tant que maître et les commandes de batterie (3) en tant qu'esclaves.
